# EUROPEAN PATENT SPECIFICATION

(11) **EP 1 184 272 B1**
(45) Date of publication and mention of the grant of the patent: **05.11.2003**
(21) Application number: 01121011.9
(22) Date of filing: 31.08.2001
(51) Int. Cl.: B62J 39/00, B62J 27/00

(54) **Wheelie prevention device for a motorcycle and method for preventing a wheelie of a motorcycle**
Vorrichtung zur Verhinderung des Aufbäumens eines Motorrades und Methode dazu
Appareil et méthode permettant d'éviter le cabrage de la roue avant

(30) Priority: 01.09.2000 JP 2000265282
(43) Date of publication of application: 06.03.2002
(73) Proprietor: YAMAHA HATSUDOKI KABUSHIKI KAISHA, Iwata-shi Shizuoka-ken (JP)
(72) Inventor: Hasegawa, Takahiko, Iwata-shi, Shizuoka-ken (JP)
(74) Representative: Grünecker, Kinkeldey, Stockmair & Schwanhäusser Anwaltssozietät

(56) References cited:
- DE-A- 3 542 353
- DE-A- 19 532 521

## Description

This invention relates to a wheelie prevention device for a motorcycle and a method for preventing a wheelie of a motorcycle.

Motorcycles are provided with an ECU (electronic control unit) to control the drive of their power source, an engine or an electric motor. In engine-driven vehicles, the ECU is connected to sensors for detecting: throttle opening, engine revolution, temperatures of various parts of the engine, and other operating conditions. The ECU performs, on the basis of data detected with those sensors, controls ignition timing and fuel injection according to predetermined programs and maps. In electric motor-operated motorcycles, output of the motor is controlled with the operation command for the accelerator operation amount.

When such a motorcycle is being driven, a phenomenon (wheelie) may occur in which the front wheel is raised if the accelerator is suddenly opened or the clutch lever is rapidly released.

On the other hand, a type of acceleration sensor using semiconductor is known. Such an acceleration sensor is constituted with a capacitor formed between electrodes to change its capacitance according to acceleration so that the magnitude of acceleration is detected. The acceleration sensor is in the form of a semiconductor element, has no large mechanical components except for the electrodes, and can detect acceleration with high accuracy.

Document DE 19532521 discloses a wheelie prevention device for a motorcycle comprising a controller, wherein said controller is provided for determining a current wheelie state of the motorcycle without considering the acceleration of the motorcycle.

It is an objective of the present invention to provide a wheelie prevention device for a motorcycle and a method for preventing a wheelie of a motorcycle, wherein the handling of the motorcycle is improved.

According to the apparatus aspect of the present invention, said objective is solved by a wheelie prevention device for a motorcycle comprising a controller controlling an output of a power source of the motorcycle and an acceleration sensor for detecting an acceleration of the motorcycle, wherein said controller is provided for determining a current and/or imminent wheelie state of the motorcycle in accordance with the detected acceleration of the motorcycle and for lowering the output of the power source of the motorcycle when the current and/or imminent wheelie state of the motorcycle is determined.

Such a wheelie prevention device for motorcycles is capable of automatically detecting the wheelie state and bringing it back to the normal state.

Preferably, said controller is provided for gradually lowering the output of the power source of the motorcycle when the wheelie state of the motorcycle is determined. Furthermore, said controller is provided for gradually increasing the output of the power source of the motorcycle when no wheelie state of the motorcycle is determined after the wheelie state of the motorcycle was determined. Thus, a smooth and stable operation can be provided.

A preferred embodiment comprises a motorcycle speed sensor for detecting a speed of the motorcycle and/or a throttle opening sensor for detecting a throttle opening of the power source, and said controller is provided for determining the wheelie state of the motorcycle in accordance with the detected acceleration and the speed of the motorcycle and/or the throttle opening of the power source.

According to preferred embodiments, said controller is provided for controlling the output of an combustion engine as the power source of the motorcycle and for controlling ignition and/or fuel injection and/or throttle opening of the combustion engine for lowering the output of the power source of the motorcycle when the wheelie state of the motorcycle is determined, or said controller is provided for controlling the output of an electric motor as the power source of the motorcycle and for lowering the output of the power source of the motorcycle when the wheelie state of the motorcycle is determined.

According to the method aspect of the present invention, said objective is solved by a method for preventing a wheelie of a motorcycle having a power source, with the steps of:
- detecting an acceleration of the motorcycle,
- determining a current and/or imminent wheelie state of the motorcycle in accordance with the detected acceleration of the motorcycle, and
- lowering the output of the power source of the motorcycle when the current and/or imminent wheelie state of the motorcycle is determined.

Preferably, said method comprises the step of gradually lowering the output of the power source of the motorcycle when the wheelie state of the motorcycle is determined. Furthermore, it is preferred to gradually increase the output of the power source of the motorcycle when no wheelie state of the motorcycle is determined after the wheelie state of the motorcycle was determined.

Preferably, said method comprises the steps of detecting a speed of the motorcycle and/or a throttle opening of the power source and determining the wheelie state of the motorcycle in accordance with the detected acceleration and the speed of the motorcycle and/or the throttle opening of the power source.

According to preferred embodiments, an combustion engine is used as the power source of the motorcycle or an electric motor is used as the power source of the motorcycle and said method comprises the steps of controlling ignition and/or fuel injection and/or throttle opening of the combustion engine for lowering the output of the power source of the motorcycle when the wheelie state of the motorcycle is determined, or controlling the output of the electric motor as the power source of the motorcycle for lowering the output of the power source of the motorcycle when the wheelie state of the motorcycle is determined.

The present invention is illustrated and explained by means of preferred embodiments in conjunction with the accompanying drawings. In the drawings wherein:
- FIG. 1: is a block constitution diagram of an embodiment; and
- FIG. 2: is a flowchart of operation of the embodiment shown in FIG. 1.

An embodiment will be hereinafter described in reference to the appended drawings.

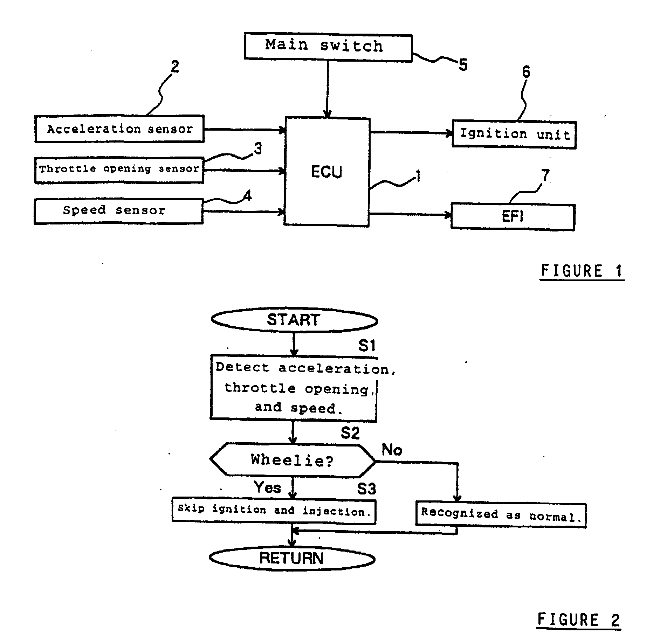

FIG. 1 shows a constitution of a wheelie prevention device according to the embodiment.

An ECU 1 (controller) made as a single unit in a case for example is attached to a vehicle body (not shown) of a motorcycle. To the ECU are connected an acceleration sensor 2, a throttle opening sensor 3, and a speed sensor 4. To the ECU are further connected (not shown) temperature sensors for various parts of the engine, pressure sensors such as an oil pressure sensor, and other sensors for detecting various operating states; and also a starter switch (not shown), a power source (not shown), etc. To the output side of the ECU 1 are connected an ignition unit 6 consisting of an ignition coil, etc. for producing sparks with ignition plugs, a fuel injection unit 7 consisting of the injector of the EFI and a coil for actuating its solenoid, etc., and other actuators such as a hydraulic pump (not shown), etc.

The ECU 1, using the signals from those sensors and switches, actuates the ignition unit 6 and the fuel injection unit 7 according to an ignition control program, a fuel injection program and maps, etc. In this embodiment, the ECU 1 uses the acceleration sensor 2 as a wheelie detection sensor to discriminate the wheelie state on the basis of detected signals from the throttle opening sensor 3 and the speed sensor 4.

FIG. 2 is a flowchart of wheelie judgment by means of the ECU 1. This flowchart is the one for a subroutine to break in and constitute a main routine repeated every several milliseconds, for example according to control programs of ordinary ignition timing and fuel injection.

First, acceleration, throttle opening, and vehicle speed are detected and the detected data are inputted to the ECU (step S1). On the basis of those data, whether a vehicle is in the wheelie state or not is judged (step S2). In case acceleration is used to make judgment, a vehicle is judged to be in the wheelie state when a detected acceleration exceeds a threshold for example 0.9g. where g is assumed to be the gravitational acceleration. The reason for being able to detect the wheelie state from the acceleration is that the detected value increases (by about 0.2g to 0.5g in ordinary drive) as the vehicle body pitches with the front wheel raised, and so the acceleration sensor detects the gravitational acceleration component. In that case, it may be arranged that the wheelie state is judged to have occurred when the threshold is exceeded for more than a specified period of time (for example one second) so as to prevent erroneous detection.

As for the throttle opening, it is arranged to judge that the vehicle is in the wheelie state when a throttle opening of for example 80 % or more of the full opening is detected. When arranging to judge the occurrence of the wheelie state from acceleration or throttle opening, a wheelie judgment condition based on the vehicle speed may be set. When the vehicle is started to run for example, a condition of a vehicle speed lower than a specified value may be set and a specified range of vehicle speeds may be set during normal vehicle run. Depending on the judgment conditions set, it is also possible to judge not only a current wheelie state but also an imminent wheelie state.

When the vehicle is judged to be in the wheelie state, operation is controlled to thin out the frequency of ignition and/or fuel injection (step S3). As a result, engine output is lowered to lower the front wheel. Here, control is made to thin out the intervals so that the engine output is lowered gradually for example from 100 % to 80 % and 60 % and that the front wheel lowers gradually. In case ignitions are to be thinned out, applications of ignition current to the ignition coil made according to ordinary ignition control program are stopped at appropriate intervals. In case fuel injections are to be thinned out, current applications to the injector solenoid are thinned out likewise to stop injections at appropriate intervals.

Ignition and fuel injection may be thinned out for both or either one. Here, the control may be that the thinning intervals are changed according to vehicle speeds, or that the throttle opening is reduced at an appropriate speed so that the front wheel lowers gradually.

When the vehicle is judged not to be in a wheelie state in the step S2, it is recognized to be normal, and the process goes back to the main routine to control ignition and fuel injection according to the normal control program (step S4). In that case, when ignition and/or fuel injection is in the thinned-out state, the state is brought back gradually to normal so that the output becomes for example from 60 % to 80 % and 100 %. Doing so is to prevent the vehicle from losing balance or coming to a wheelie state again due to sudden increase in the output.

With the embodiment as described above, the acceleration sensor is used as the wheelie detection sensor. When the detected signal is inputted into the ECU and if the detected value is greater than a specified value, the ECU determines the state as wheelie. Thus, the wheelie state is detected quickly and reliably. Based on the detection, it is also possible to automatically activate the power source under control to bring the vehicle from the wheelie state to the normal state. That is to say, in case a wheelie state is judged to be present with the detected output being greater than a threshold, an engine-operated vehicle for example is driven by thinning out at appropriate intervals the number of applications of normally controlled drive pulses in the ignition or fuel injection cycle, with smaller number of ignitions or fuel injections than under normal control, to lower the output. In electric motor-operated vehicles, the motor output can be reduced by command operation of input to the motor. Thus, the front wheel can be lowered automatically and reliably.

Here, the reduction in the output is made gradually: In engines, the injection thinning intervals are made longer at first and gradually shorter, and in electric motors, the motor output is reduced slowly, so that the front wheel lowers not all of a sudden due to sudden reduction in the output but slowly, and the vehicle is prevented from falling or becoming unstable.

The embodiments mentioned above are teaching a wheelie prevention device for a motorcycle comprising a controller 1 controlling an output of a power source of the motorcycle. Said device further comprises an acceleration sensor 2 for detecting an acceleration of the motorcycle. Said controller 1 is provided for determining a current and/or imminent wheelie state of the motorcycle in accordance with the detected acceleration of the motorcycle and for lowering the output of the power source of the motorcycle when the current and/or imminent wheelie state of the motorcycle is determined. Accordingly, the method for preventing a wheelie of a motorcycle having a power source, with the steps of: detecting an acceleration of the motorcycle, determining a current and/or imminent wheelie state of the motorcycle in accordance with the detected acceleration of the motorcycle, and lowering the output of the power source of the motorcycle when the current and/or imminent wheelie state of the motorcycle is determined.

Said controller 1 is provided for gradually lowering the output of the power source of the motorcycle when the wheelie state of the motorcycle is determined. Moreover, said controller 1 is provided for gradually increasing the output of the power source of the motorcycle when no wheelie state of the motorcycle is determined after the wheelie state of the motorcycle was determined. Accordingly, the method for preventing a wheelie further comprises the step of gradually lowering the output of the power source of the motorcycle when the wheelie state of the motorcycle is determined. Moreover, the method comprises the step of increasing the output of the power source of the motorcycle when no wheelie state of the motorcycle is determined after the wheelie state of the motorcycle was determined.

The prevention device for a motorcycle further comprises a motorcycle speed sensor 4 for detecting a speed of the motorcycle and/or a throttle opening sensor 3 for detecting a throttle opening of the power source. Said controller 1 is provided for determining the wheelie state of the motorcycle in accordance with the detected acceleration and the speed of the motorcycle and/or the throttle opening of the power source. Accordingly, the method for preventing a wheelie further comprises the steps of detecting a speed of the motorcycle and/or a throttle opening of the power source and determining the wheelie state of the motorcycle in accordance with the detected acceleration and the speed of the motorcycle and/or the throttle opening of the power source.

The controller 1 is provided for controlling the output of an combustion engine as the power source of the motorcycle and for controlling ignition and/or fuel injection and/or throttle opening of the combustion engine for lowering the output of the power source of the motorcycle when the wheelie state of the motorcycle is determined. Accordingly, the method for preventing a wheelie further comprises the steps of controlling ignition and/or fuel injection and/or throttle opening of the combustion engine for lowering the output of the power source of the motorcycle when the wheelie state of the motorcycle is determined.

Alternatively, said controller 1 is provided for controlling the output of an electric motor as the power source of the motorcycle and for lowering the output of the power source of the motorcycle when the wheelie state of the motorcycle is determined. Accordingly, the method for preventing a wheelie further comprises the steps of controlling the output of the electric motor as the power source of the motorcycle for lowering the output of the power source of the motorcycle when the wheelie state of the motorcycle is determined.

The embodiments mentioned above are providing a wheelie prevention device for a motorcycle provided with an ECU for performing the control of the output of the motorcycle with the ECU connected to an acceleration sensor, characterized by controlling to judge from the output detected with the acceleration sensor whether the vehicle is in a wheelie state and to lower the output of the power source.

With this constitution, the acceleration sensor is used as the wheelie detection sensor. When a detected signal greater than a specified value is inputted to the ECU, the vehicle is determined to be in a wheelie state. On the basis of that, the output of the engine or the motor is automatically lowered to bring the vehicle from the wheelie state back to the normal state.

A preferable example constitution is characterized in that the output of the power source is gradually lowered when the wheelie state is detected.

With this constitution, the output is gradually lowered when the vehicle is determined to be in the wheelie state with the output detected with the acceleration sensor being beyond the specified value. In the case of an engine, for example, its output is reduced by reducing the number of ignitions of ordinary control by stopping at appropriate intervals the drive pulse signals applied to the ignition coil in the ordinary ignition cycle so that the ignitions are controlled to be thinned out. Here, the intervals of stopping or thinning out the ignitions are made longer at the beginning and gradually shorter so that the front wheel lowers not all at once due to sudden reduction in the output but slowly from the wheelie state, and that the vehicle is prevented from becoming unstable or. falling. In place of or in addition to such ignition control, fuel injection may be likewise thinned out. In that case, the frequency of applying drive pulse signals to the injector solenoid is gradually reduced to lower the output.

In the case of motor drive in the electric motor-operated vehicle, the output is reduced by the input control of the drive power.

## Claims

1. Wheelie prevention device for a motorcycle comprising a controller (1) controlling an output of a power source of the motorcycle and an acceleration sensor (2) for detecting an acceleration of the motorcycle, wherein said controller (1) is provided for determining a current and/or imminent wheelie state of the motorcycle in accordance with the detected acceleration of the motorcycle and for lowering the output of the power source of the motorcycle when the current and/or imminent wheelie state of the motorcycle is determined.

2. Wheelie prevention device for a motorcycle according to claim 1, **characterized in that** said controller (1) is provided for gradually lowering the output of the power source of the motorcycle when the wheelie state of the motorcycle is determined.

3. Wheelie prevention device for a motorcycle according to claim 1 or 2, **characterized in that,** said controller (1) is provided for gradually increasing the output of the power source of the motorcycle when no wheelie state of the motorcycle is determined after the wheelie state of the motorcycle was determined.

4. Wheelie prevention device for a motorcycle according to at least one of the claims 1 to 3, **characterized by** a motorcycle speed sensor (4) for detecting a speed of the motorcycle and/or a throttle opening sensor (3) for detecting a throttle opening of the power source and said controller (1) is provided for determining the wheelie state of the motorcycle in accordance with the detected acceleration and the speed of the motorcycle and/or the throttle opening of the power source.

5. Wheelie prevention device for a motorcycle according to at least one of the claims 1 to 4, **characterized in that** said controller (1) is provided for controlling the output of an combustion engine as the power source of the motorcycle and for controlling ignition and/or fuel injection and/or throttle opening of the combustion engine for lowering the output of the power source of the motorcycle when the wheelie state of the motorcycle is determined, or said controller (1) is provided for controlling the output of an electric motor as the power source of the motorcycle and for lowering the output of the power source of the motorcycle when the wheelie state of the motorcycle is determined.

6. Method for preventing a wheelie of a motorcycle having a power source, with the steps of:
- detecting an acceleration of the motorcycle,
- determining a current and/or imminent wheelie state of the motorcycle in accordance with the detected acceleration of the motorcycle, and
- lowering the output of the power source of the motorcycle when the current and/or imminent wheelie state of the motorcycle is determined.

7. Method for preventing a wheelie according to claim 6, **characterized by** gradually lowering the output of the power source of the motorcycle when the wheelie state of the motorcycle is determined.

8. Method for preventing a wheelie according to claim 6 or 7, **characterized by** gradually increasing the output of the power source of the motorcycle when no wheelie state of the motorcycle is determined after the wheelie state of the motorcycle was determined.

9. Method for preventing a wheelie according to at least one of the claims 6 to 8, **characterized by** detecting a speed of the motorcycle and/or a throttle opening of the power source and determining the wheelie state of the motorcycle in accordance with the detected acceleration and the speed of the motorcycle and/or the throttle opening of the power source.

10. Method for preventing a wheelie according to at least one of the claims 6 to 9, wherein an combustion engine is used as the power source of the motorcycle or an electric motor is used as the power source of the motorcycle **characterized by** controlling ignition and/or fuel injection and/or throttle opening of the combustion engine for lowering the output of the power source of the motorcycle when the wheelie state of the motorcycle is determined, or controlling the output of the electric motor as the power source of the motorcycle for lowering the output of the power source of the motorcycle when the wheelie state of the motorcycle is determined.

## Patentansprüche

1. Vorrichtung zum Verhindern des Aufbäumens für ein Motorrad mit einer Steuerung (1), die eine Ausgangsleistung einer Leistungsquelle des Motorrades steuert und einem Beschleunigungssensor (2) zum Erfassen einer Beschleunigung des Motorrades, wobei die Steuerung (1) vorgesehen ist, um einen momentanen und / oder drohenden Aufbäumzustand des Motorrades in Übereinstimmung mit der erfassten Beschleunigung festzustellen und um die Ausgangsleistung der Leistungsquelle des Motorrades zu vermindern, wenn der momentane und / oder drohender Aufbäumzustand des Motorrades festgestellt wird.

2. Vorrichtung zum Verhindern des Aufbäumens für ein Motorrad nach Anspruch 1, **dadurch gekennzeichnet, dass** die Steuerung (1) vorgesehen ist, um die Ausgangsleistung der Leistungsquelle des Motorrades allmählich zu vermindern, wenn der Aufbäumzustand des Motorrades festgestellt wird.

3. Vorrichtung zum Verhindern des Aufbäumens für ein Motorrad nach Anspruch 1 oder 2, **dadurch gekennzeichnet, dass** die Steuerung (1) vorgesehen ist, um die Ausgangsleistung der Leistungsquelle des Motorrades allmählich zu erhöhen, wenn kein Aufbäumzustand des Motorrades festgestellt wird, nachdem der Aufbäumzustand des Motorrades festgestellt wurde.

4. Vorrichtung zum Verhindern des Aufbäumens für ein Motorrad nach zumindest einem der Ansprüche 1 bis 3, **gekennzeichnet durch** einen Motorrad- Geschwindigkeitssensor (4) zum Erfassen einer Geschwindigkeit des Motorrades und / oder einen Drosselöffnungssensor (3), um eine Drosselöffnung der Leistungsquelle zu erfassen und die Steuerung (1) zum Feststellen des Aufbäumzustand des Motorrades in Übereinstimmung mit der erfassten Beschleunigung und der Geschwindigkeit des Motorrades und / oder der Drosselöffnung der Leistungsquelle vorgesehen ist.

5. Vorrichtung zum Verhindern des Aufbäumens für ein Motorrad nach zumindest einem der Ansprüche 1 bis 4, **dadurch gekennzeichnet, dass** die Steuerung (1) vorgesehen ist, um die Ausgangsleistung einer Verbrennungskraftmaschine als der Leistungsquelle des Motorrades zu steuern und / oder um die Zündung und / oder Kraftstoffeinspritzung und / oder die Drosselöffnung der Verbrennungskraftmaschine zu steuern, um die Ausgangsleistung der Leistungsquelle des Motorrades zu vermindern, wenn der Aufbäumzustand des Motorrades festgestellt wird, oder die Steuerung (1) vorgesehen ist, um die Ausgangsleistung eines Elektromotors als die Leistungsquelle des Motorrades zu steuern und um die Ausgangsleistung der Leistungsquelle des Motorrades zu vermindern, wenn der Aufbäumzustand des Motorrades festgestellt wird.

6. Verfahren zum Verhindern eines Aufbäumzustand eines Motorrades, das eine Leistungsquelle hat, mit den Schritten von:
- Erfassen einer Beschleunigung des Motorrades,
- Bestimmen eines momentanen und / oder eines drohenden Aufbäumzustand des Motorrades in Übereinstimmung mit der erfassten Beschleunigung des Motorrades, und
- Vermindern der Ausgangsleistung der Leistungsquelle des Motorrades, wenn der momentane und / oder der drohende Aufbäumzustand des Motorrades festgestellt wird.

7. Verfahren zum Verhindern eines Aufbäumens nach Anspruch 6, **gekennzeichnet durch** allmähliches Vermindern der Ausgangsleistung der Leistungsquelle des Motorrades, wenn der Aufbäumzustand des Motorrades festgestellt wird.

8. Verfahren zum Verhindern eines Aufbäumens nach Anspruch 6 oder 7, **gekennzeichnet durch** allmähliches Erhöhen der Ausgangsleistung der Leistungsquelle des Motorrades, wenn kein Aufbäumzustand des Motorrades festgestellt wird, nachdem der Aufbäumzustand des Motorrades festgestellt wurde.

9. Verfahren zum Verhindern eines Aufbäumens nach zumindest einem der Ansprüche 6 bis 8, **gekennzeichnet durch** das Erfassen einer Geschwindigkeit des Motorrades und / oder einer Drosselöffnung der Leistungsquelle und Feststellen des Aufbäumzustand des Motorrades in Übereinstimmung mit der erfassten Beschleunigung und der Geschwindigkeit des Motorrades und / oder der Drosselöffnung der Leistungsquelle

10. Verfahren zum Verhindern eines Aufbäumens nach zumindest einem der Ansprüche 6 bis 9, wobei eine Verbrennungskraftmaschine als die Leistungsquelle des Motorrades verwendet wird, oder ein Elektromotor als die Leistungsquelle des Motorrades verwendet wird, **gekennzeichnet durch** Steuern der Zündung und / oder der Kraftstoffeinspritzung und / oder der Drosselöffnung der Verbrennungskraftmaschine, um die Ausgangsleistung der Leistungsquelle des Motorrades zu vermindern, wenn der Aufbäumzustand des Motorrades festgestellt wird, oder um die Ausgangsleistung des Elektromotors als die Leistungsquelle des Motorrades zu steuern, um die Ausgangsleistung der Leistungsquelle des Motorrades zu vermindern, wenn der Aufbäumzustand des Motorrades bestimmt wird.

## Revendications

1. Dispositif permettant d'empêcher le cabrage de la roue avant pour un motocycle comprenant un contrôleur (1) commandant la fourniture de source de puissance du motocycle et un capteur d'accélération (2) pour détecter une accélération du motocycle, dans lequel ledit contrôleur (1) est prévu, pour déterminer un courant et/ou un état imminent de cabrage de la roue avant du motocycle, selon l'accélération détectée du motocycle, et pour abaisser la production de puissance mécanique par la source de puissance du motocycle, lorsque le courant et/ou l'état de cabrage de la roue avant imminent du motocycle est déterminé.

2. Dispositif permettant d'empêcher le cabrage de la roue avant pour un motocycle selon la revendication 1, **caractérisé en ce que** ledit contrôleur (1) est prévu pour graduellement abaisser la fourniture de la source de puissance du motocycle, lorsque l'état de cabrage de la roue avant du motocycle est déterminé.

3. Dispositif permettant d'empêcher le cabrage de la roue avant pour un motocycle selon la revendication 1 ou 2, **caractérisé en ce que** ledit contrôleur (1) est prévu pour graduellement augmenter la fourniture de la source de puissance du motocycle, lorsqu'aucun état de cabrage de la roue avant du motocycle n'est déterminé, après avoir déterminé l'état de cabrage de la roue avant du motocycle.

4. Dispositif permettant d'empêcher le cabrage de la roue avant pour un motocycle selon au moins l'une des revendications 1 à 3, **caractérisé par** un capteur de vitesse de motocycle (4) pour détecter la vitesse du motocycle et/ou un capteur d'ouverture d'étranglement (3) pour détecter le degré d'ouverture d'étranglement de la source de puissance, et ledit contrôleur (1) est prévu pour déterminer l'état de cabrage de la roue avant du motocycle selon l'accélération de la vitesse détectée du motocycle et/ou le degré d'ouverture d'étranglement de la source de puissance.

5. Dispositif permettant d'empêcher le cabrage de la roue avant pour un motocycle selon au moins l'une des revendications 1 à 4, **caractérisé en ce que** ledit contrôleur (1) est prévu pour commander la fourniture de puissance mécanique par un moteur à combustion servant de source de puissance au motocycle et pour commander l'allumage et/ou l'injection de carburant et/ou le degré d'ouverture d'étranglement du moteur à combustion, pour abaisser la fourniture de puissance mécanique par la source de puissance du motocycle, lorsque l'état de cabrage de la roue avant du motocycle est déterminé, ou ledit contrôleur (1) est prévu pour commander la fourniture de puissance mécanique d'un moteur électrique faisant office de source de puissance du motocycle et pour abaisser la fourniture de puissance mécanique de la source de puissance du motocycle, lorsque l'état de cabrage de la roue avant du motocycle est déterminé.

6. Procédé permettant d'empêcher le cabrage de la roue avant d'un motocycle muni d'une source de puissance, comprenant les étapes consistant à :
- détecter une accélération du motocycle,
- déterminer un état de cabrage actuel et/ou imminent de la roue avant du motocycle selon l'accélération détectée du motocycle, et
- abaisser la fourniture de puissance mécanique de la source de puissance du motocycle, lorsque l'état actuel et/ou imminent de cabrage de la roue avant du motocycle a été terminé.

7. Procédé permettant d'empêcher le cabrage de la roue avant selon la revendication 6, **caractérisé par** l'abaissement graduel de la puissance mécanique fournie par la source de puissance du motocycle, lorsque l'état de cabrage de la roue avant du motocycle est déterminé.

8. Procédé permettant d'empêcher le cabrage de la roue avant selon la revendication 6 ou 7, **caractérisé par** l'augmentation graduelle de la puissance mécanique fournie par la source de puissance du motocycle, lorsqu'aucun état de cabrage de la roue avant du motocycle est déterminé après que l'état de cabrage de la roue avant du motocycle ait été déterminé.

9. Procédé permettant d'empêcher le cabrage de la roue avant selon au moins l'une des revendications 6 à 8, **caractérisé par** la détection d'une vitesse du motocycle et/ou du degré d'ouverture d'étranglement de la source de puissance et la détermination de l'état de cabrage de la roue avant du motocycle selon l'accélération détectée et la vitesse du motocycle et/ou le degré d'ouverture d'étranglement de la source de puissance.

10. Procédé permettant d'empêcher le cabrage de la roue avant selon au moins l'une des revendications 6 à 9, dans lequel un moteur de combustion est utilisé comme source de puissance du motocycle ou bien un moteur électrique est utilisé comme source de puissance du motocycle, **caractérisé par** la commande de l'allumage et/ou de l'injection de carburant et/ou du degré d'ouverture d'étranglement du moteur à combustion, afin d'abaisser la puissance mécanique fournie par la source de puissance du motocycle, lorsque l'état de cabrage de la roue avant du motocycle est déterminé, ou la commande de la fourniture de puissance mécanique par le moteur électrique faisant office de source de puissance du motocycle pour abaisser la puissance mécanique fournie par la source de puissance du motocycle, lorsque l'état de cabrage de la roue avant du motocycle est déterminé.
